# EUROPEAN PATENT SPECIFICATION

(11) **EP 2 214 122 B1**
(45) Date of publication and mention of the grant of the patent: **17.07.2013**
(21) Application number: 09001443.2
(22) Date of filing: 03.02.2009
(51) Int. Cl.: G06K 9/00

(54) **Methods and devices for assisting a vehicle driver**
Verfahren und Vorrichtung zur Unterstützung eines Fahrzeugfahrers
Procédés et dispositifs pour aider le conducteur d'un véhicule

(43) Date of publication of application: 04.08.2010
(73) Proprietor: Harman Becker Automotive Systems GmbH, 76307 Karlsbad (DE)
(72) Inventor: Platonov, Juri, 82031 Grünwald (DE); Pryakhin, Alexey, 81476 München (DE); Kunath, Peter, 80999 München (DE)
(74) Representative: Bertsch, Florian Oliver

(56) References cited:
- EP-A- 0 782 118
- EP-A- 1 711 006
- WO-A-2006/080547
- US-A1- 2006 244 830
- JANSSEN H ET AL: "Vehicle surround sensing based on information fusion of monocular video and digital map" INTELLIGENT VEHICLES SYMPOSIUM, 2004 IEEE PARMA, ITALY JUNE 14-17, 2004, PISCATAWAY, NJ, USA,IEEE, 14 June 2004 (2004-06-14), pages 244-249, XP010727476 ISBN: 978-0-7803-8310-4
- SE S ET AL: "Vision-based mobile robot localization and mapping using scale-invariant features" PROCEEDINGS OF THE 2001 IEEE INTERNATIONAL CONFERENCE ON ROBOTICS AND AUTOMATION. ICRA 2001. SEOUL, KOREA, MAY 21 - 26, 2001; [PROCEEDINGS OF THE IEEE INTERNATIONAL CONFERENCE ON ROBOTICS AND AUTOMATION], NEW YORK, NY : IEEE, US, vol. 2, 21 May 2001 (2001-05-21), pages 2051-2058, XP010550446 ISBN: 978-0-7803-6576-6
- HEIMES F ET AL: "Automatic generation of intersection models from digital maps for vision-based driving on inner city intersections" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3 October 2000 (2000-10-03), pages 498-503, XP010528986 ISBN: 978-0-7803-6363-2

## Description

The present invention relates to methods and devices for assisting a driver of a vehicle.

### Related art

In present driver assist systems, it is known to use image processing of a video signal of the vehicle environment so as to identify objects in the vehicle environment. On the basis of the identified objects, an indication may be provided to the driver of the vehicle so as to assist the driver in navigating or driving the vehicle.

However, image processing of a video signal requires significant processing resources and therefore correspondingly designed driver assist systems require powerful processing equipment. On the other hand, even when using powerful processing resources, the object identification process may still suffer from an insufficient accuracy.

Accordingly, there is a need for driver assist technics, which allow for a good accuracy of object recognition and for an efficient usage of processing resources.

In WO 2006/080547 A1, an image recognizing apparatus and a method to be used in a vehicle in connection with a navigation apparatus is described. The apparatus may include a map database, and image recognition may be accomplished on the basis of land object information stored in the map database.

In "Vehicle Surround Sensing Based on Information Fusion of Monocular Video and Digital Map", by Holger Janssen and Wolfgang Nielssen, IEEE Intelligent Vehicles Symposium, University of Parma (2004), it is described to sense the vehicle surrounding on the basis of a digital map. For this purpose, the digital map information is extended by optional non-standard attributes. The extended map data may specifically include relevant road signs linked to digital map contents. The digital map information is used to support the video based perception.

In EP 0782118 A1, a navigation system for vehicles is described. The navigation system comprises an information storage unit with an image data file, and a video camera. The navigation system may be operated to recognize distinctive objects from the images recorded by the video camera. Image recognition may be accomplished by comparison with information on colour and shape in the image data file.

In EP 1711006 A2, a video type judgement system is described. In this system, a landmark feature variable is used as a basis for determining the type of video image. The landmark information may include a position and a form of the landmark.

In US 2006/0244830 A1, a system for navigation with captured images is described. In this system, images are captured and recognized by comparison to images of landmarks stored in a database of location labelled landmark images. The system may comprise an on-board group of systems and off-board systems.

In "Vision-based Mobile Robot Localization and Mapping using Scale-Invariant Features", by Stephen Se, David Lowe and Jim Little, proceedings of the 2001 IEEE International Conference on Robotics & Automation, Seoul, Korea (2001), methods for mobile robot localization and mapping are described. According to these methods, it is proposed to use scale-invariant features, which are used as landmarks. More specifically, the scale-invariant feature transform (SIFT) feature format is mentioned.

In "Localization Based on Building Recognition" by Wei Zhang and Jana Kosecka, proceedings of the 2005 IEEE computer society conference on computer vision and pattern regonition (CVPR'05), concepts for improving navigational capabilities of people in urban areas are described, which are based on recognizing landmarks to provide the people with knowledge concerning their current location.

In "Precise Visual Navigation using Multi-Stereo Vision and Landmark Matching" by Zhiwei Zhu, Taragay Oskiper, Supun Samarasekera and Rakesh Kumar in Unmanned Systems Technology IX, Proc. Of SPIE Vol. 6561, 656108 (2007), it is proposed to capture landmarks of a scene in order to improve pose estimation accuracy and recognize previously visited locations during navigation.

"Outdoors Augmented Reality on Mobile Phone using Loxel-Based visual Feature Organization" by Gabriel Takacs et al, MIR'08, October 30-31, 2008, Vancouver, British Columbia, Canada, an augmented reality system for mobile phones is described which matches camera-phone images against a large database of location-tagged images. The matching is based on an SURF algorithm and a loxel-based feature store located in a server. On the basis of the matching, a view finder of the mobile phone can be augmented witch further information such as the menu for customer ratings of a restaurant.

### Summary

The above need is met by the features of the independent claims. The dependent claims define specific embodiments of the invention.

According to a first aspect, a driver assist method is provided. The method comprises generating a video signal representing a vehicle environment outside a vehicle. For example, the video signal may be generated by a vehicle-based digital camera which detects a field of view in front of the vehicle, similar to the driver's field of view. From the video signal, at least one feature is extracted. The extracted feature is compared to at least one reference feature which is selected from a plurality of pre-computed reference features which are stored as location attributes in a map database. An object in the vehicle environment is identified on the basis of the comparison of the extracted feature and the reference feature. On the basis of the identified object, an indication is provided to a driver of the vehicle. For example, the indication may comprise a video image displayed to the driver and/or a sound signal such as a speech signal. The indication may notify the driver of the vehicle of a point of interest in the vehicle environment or of a traffic sign. The indication involves highlighting certain structures in the video signal, which is displayed to the driver, in particular edges.

In this way, the driver assist method allows for efficiently identifying objects in the vehicle environment. As the object identification process is based on pre-computed reference features which are stored as location attributes in a map database, the high accuracy level of object detection can be obtained. Further, vehicle-based data processing resources for implementing the object identification process are reduced.

The map database is external with respect to the vehicle, and the method comprises transmitting a first data signal from the vehicle to an external data processing resource, the first data signal including at least location data of the vehicle. A second data signal, which includes object identification data generated in response to the received location data, is then transmitted from the external data processing resource to the vehicle. In this way, a part of the object identification process may be implemented outside the vehicle, thereby saving data processing resources within the vehicle.

The comparison between the extracted feature and the reference feature is implemented within the vehicle by a vehicle-based data processing resource. For this purpose the object identification data transmitted from the external data processing resource to the vehicle include the reference feature which is needed by the vehicle-based data processing resource so as to accomplish the comparison.

The process of extracting the feature from the video signal is implemented by a vehicle-based data processing resource.

According to an embodiment, the external data processing resource communicates with a plurality of vehicles. This may allow for an efficient use of the external data processing resource and the external map database. Further, this may allow for correlating features extracted from video signals from different vehicles, thereby further improving the accuracy of the identification process. For example, changes of certain features may be tracked by correlating features extracted from video signals of different vehicles.

According to an embodiment, the external data processing resource communicates with the vehicle via an internet-based communication channel. In this way, existing communication resources of the vehicle may be reused for communicating with the external data processing resource and the external map database.

According to the invention, the extracted features and the reference features correspond to a transformation-invariant feature representation. For example, the features may be represented according to a SIFT-representation (SIFT: "Scale Invariant Feature Tracker") or according to a SURF-representation (SURF: "Speeded Up Robost Features"). In this way, reliable matching between the extracted features and the reference features can be performed, irrespective of the individual perspective used for generating the video signal. Further, the use of a transformation-invariant feature representation allows for efficiently storing the reference features in the map database so as to be used for future identification processes.

According to a second aspect, a driver assist device to be mounted in a vehicle is provided. The driver assist device comprises a vehicle-based video capturing device, e.g. a digital camera, configured to generate a video signal representing a vehicle environment outside the vehicle, e.g. a field of view in front of the vehicle. The driver assist device further comprises an indication device configured to provide an indication to a driver of the vehicle on the basis of an object identified in the vehicle environment, e.g. a traffic sign, road edges, a point-of-interest, or the like. The object is identified on the basis of a comparison between at least one feature extracted from the video signal and at least one reference feature selected from a plurality of pre-computed reference features which are stored as location attributes in an external map database.

The driver assist device comprises a vehicle-based transmitter for transmitting a first data signal to an external data processing resource, and a vehicle-based receiver for receiving a second data signal from the external data processing resource. The first data signal includes at least location data of the vehicle and the second data signal includesobject identification data generated in response to the located data and including the reference feature from the external database. The vehicle-based driver assist device may be configured to implement the method according to the above-mentioned first aspect.

### Brief description of the drawings

In the following, embodiments of the invention will be described in more detail by referring to the accompanying drawings, in which:
Fig. 1 schematically illustrates a driver assist system according to an embodiment of an invention,
Fig. 2 schematically illustrates the driver assist system as implemented with a plurality of vehicles,
Fig. 3 shows a flow-chart for illustrating method steps in a driver assist method according to an embodiment of the invention, and
Fig. 4 shows a flow-chart for illustrating further method steps in a driver assist method according to an embodiment of the invention.

### Detailed description of the preferred embodiments

In the following, embodiments of the invention will be explained by referring to exemplary driver assist systems and methods. The exemplary driver assist systems are based on vehicle-based video capturing devices, e.g. digital cameras. The video capturing devices may be used for tasks such as driving-lane recognition or traffic-sign recognition. Further, the exemplary driver assist systems involve high-speed data communication between vehicle-based components and external components, in particular via Internet communication channels. According to some exemplary embodiments, an architecture is provided in which data processing tasks are distributed between a vehicle-based data processing resource and an external data processing resource. In the exemplary embodiments as described in the following, the external data processing resource is coupled with a map database. Accordingly, the external data processing resource may also be referred as a map-database server. A vehicle-based data processing resource communicating with the map-database server may also be referred to as a vehicle-based client. As used herein, the term "data processing resource" is intended to encompass a single data processing device, e.g. a processor, and arrangements of multiple data processing devices.

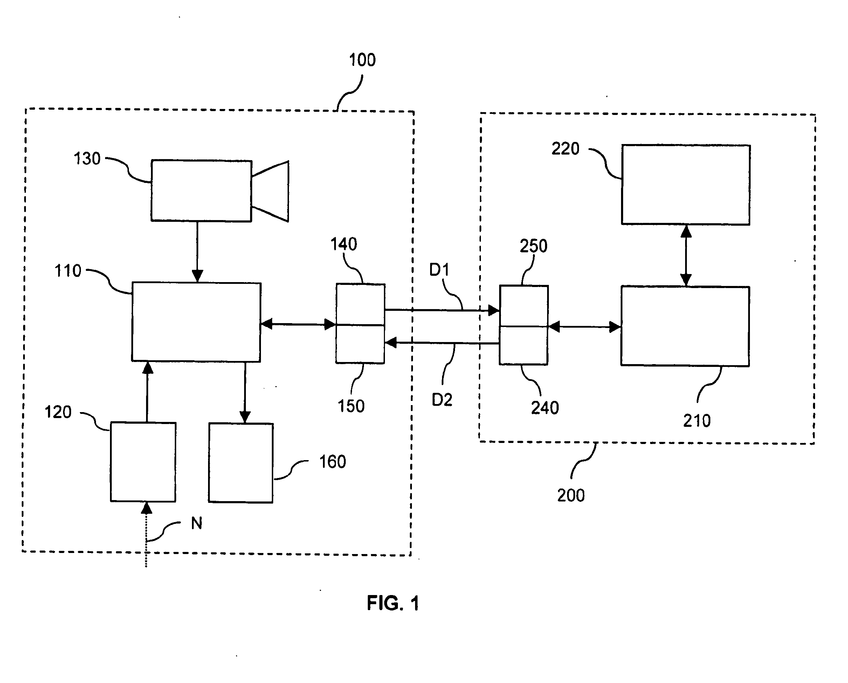

Fig. 1 shows a driver assist system according to an embodiment of the invention. The driver assist system is based on a distributed architecture in which one portion is located in a vehicle 100 and the other portion is located outside the vehicle in a map-database server 200.

In the vehicle 100, the driver assist system comprises a vehicle-based data processing resource 110, a navigation receiver 120, e.g. a GPS receiver or other type of navigation receiver, a video capturing device 130, e.g. a digital camera, a vehicle-based transmitter 140, a vehicle-based receiver 150, and an indication device 160, i.e. an optical display device and/or an accoustic output device. The above components may be part of or associated with a navigation system of the vehicle 100, which is configured for directing the driver of the vehicle to a specific destination by providing suitable indications.

The navigation receiver 120 receives a navigation data signal N from a navigation satellite. On the basis of the navigation signal N, the present location of the vehicle 100 may be determined so as to obtain location data of the vehicle 100.

The map database server 200 comprises an external data processing resource 210 and a map database 220. Further, the map database server 200 comprises a transmitter 240 and a receiver 250. By means of the transmitters 140, 240 and the receivers, 150, 250, the vehicle-based data processing resource 110 and the external data processing resource 210 are coupled to each other so as to allow for exchanging digital data in a bidirectional manner. In particular, a first data signal D1 is transmitted from the vehicle to the map database server 200, and a second data signal D2 is transmitted from the map database server 200 to the vehicle 100.

The video capturing device 130 is positioned within the vehicle 100 so as to detect the vehicle environment, in particular a scenery in front of the vehicle 100. The detected scenery may substantially correspond to that as viewed by the driver of the vehicle 100. The vehicle capturing device 130 outputs a video signal to the data processing resource 110. The video signal may be processed by the data processing resource 110 and may be displayed by the indication device 160 or by other vehicle-based display devices.

In the map database 220 of the map database server 200, reference features are stored as location attributes. That is to say, the reference features are associated with a specific location. Further, the reference features are associated with specific objects, such as a traffic sign, a point-of-interest or the like. The data processing resource 210 accesses the map database 220 so as to retrieve reference features in a location-selective manner. Further, the data processing resource 210 may also access the map database 220 so as to store reference features.

The overall driver assist system operates as to identify an object in the vehicle environment on the basis of the video signal as provided by the video capturing device 130. For this purpose, distinctive image features are extracted from the video signal and compared to reference image features, which are in turn selected from the map database 220 on the basis of the location of the vehicle 100. In this respect, the extracted features and the reference features may correspond to local image regions and their direct surrounding, e.g. represented by a descriptor. For example, the features may be distinctive image points such as corners of buildings, strongly textured image regions, lines, e.g. edges of buildings, or the like. In one example, the features may be represented by a SIFT-representation. In another example, the features may be represented by a SURF-representation.

In a first operating scenario of the driver assist system, which does not correspond an embodiment of the invention, the process of extracting the features from the video signal as captured by the video capturing device 130 is accomplished by the data processing resource 110, whereas the comparison of the extracted feature to the selected reference features is accomplished by the data processing resource 210. In this operating scenario, the first data signal D1, which is transmitted from the vehicle 100 to the map database server 200, includes location data of the vehicle 100 and the extracted reference feature. The second data signal D2 transmitted from the map database server 200 to the vehicle 100 is generated on the basis of the comparison accomplished by the data processing resource 210 and includes object data representing characteristics of the identified object, i.e. coordinates, dimensions and/or an identifier of the identified object. In addition or as an alternative, the second data signal D2 may also comprise pre-processed indication data, such as video data and/or audio data to be output to the driver of the vehicle 100 without any significant further processings in the vehicle 100. In the latter case, the load on the vehicle-based data processing resource 110 can be further reduced. The identifier of the object may be a designation of the object, e.g. a name of a building, a designation of the object type, e.g. traffic sign or building. Further, the object data may also include other types of useful information, e.g. the written text on the traffic sign or the like.

In a second operating scenario of the driver assist system, which does not correspond to an embodiment of the invention, process of extracting the feature from the video signal as provided by the video capturing device 130 may be accomplished by the external data processing resource 210, thereby further reducing the load on the vehicle-based data processing resource 110. In this case, the vehicle-based data processing resource 110 converts the video signal into a suitable format to be transmitted to the external data processing resource 210, e.g. by applying a compression algorithm and/or by selecting only certain image frames of the video signal. In some cases, it may also be possible to transmit the full video signal to the external data processing resource 210. Accordingly, in this operating scenario the first data signal D₁ includes video data derived from the video signal as captured by the video capturing device 130. Otherwise, the driver assist system may operate as explained for the first operating scenario.

According to a third operating scenario, which corresponds to an embodiment of the invention, both the process of extracting the feature from the video signal as provided by the video capturing device 130 and of comparing the extracted feature to selected reference features is accomplished by the vehicle-based data processing resource 110. In this operating scenario, the first data signal D1 includes the location data of the vehicle 100 and the second data signal D2 includes the reference feature from the map database 220, which are selected by the external data processing resource 210 on the basis of the received location data. Object data relating to the selected reference features may be transmitted in the second data signal D2 together with the reference feature. Alternatively, object data may be retrieved via the second data signal D2 once an object has been identified by the vehicle-based data processing resource 110. Otherwise, the driver assist system may operate as explained for the first operating scenario.

The above-mentioned operating scenarios concerning the distribution of certain data processing tasks, e.g. extracting the features and comparing the features to the reference features, in different portions of the driver assist system may be selectively implemented as different modes of operation of a single driver assist system. In such a case, a selection between the different modes of operation could be based on the load the vehicle-based data processing resource 110, on the load the external data processing resource 210, and/or on the bandwidth available for transmitting the first and second data signals D1, D₂. For example, if only a low bandwidth is available for transmitting the first and the second data signals D₁, D₂, extracting the features from the video signal could be accomplished by the vehicle-based data processing resource 110. If a high bandwidth is available for transmitting the first and second data signals D₁, D₂, the process of extracting the features from the video signal could be accomplished by the external data processing resource 210. Alternatively, a driver assist system may also be configured to operate according to only one of the above-mentioned operating scenarios.

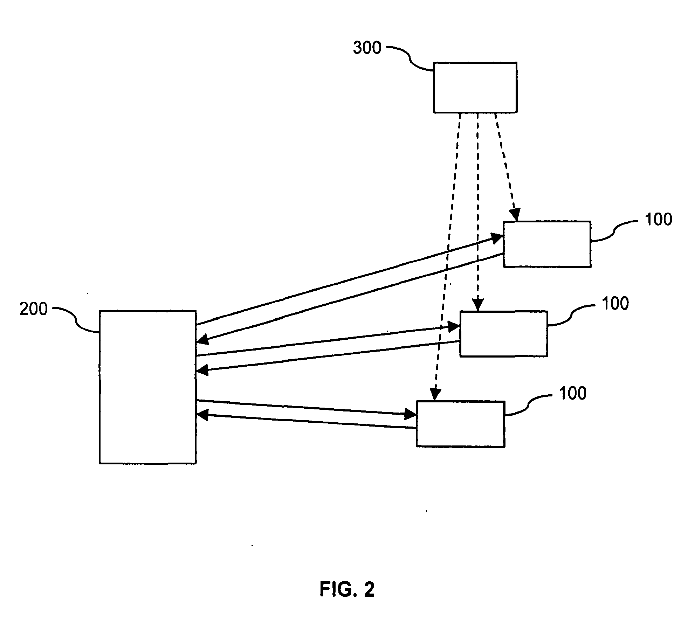

Fig. 2 schematically illustrates the driver assist system as implemented with a plurality of vehicles 100. As illustrated by solid arrows, the map database server 200 communicates with a plurality of vehicles 100. Each of the vehicles 100 receives a navigation signal (illustrated by dashed arrows) from a navigation satellite 300.

Accordingly, the map database server 200 may be efficiently used by a plurality of vehicles 100. Further, the accuracy of the object identification process may be improved by correlating the data signals received from different vehicles 100. For example, the data signals received from other vehicles 100 may be used to track variations of features.

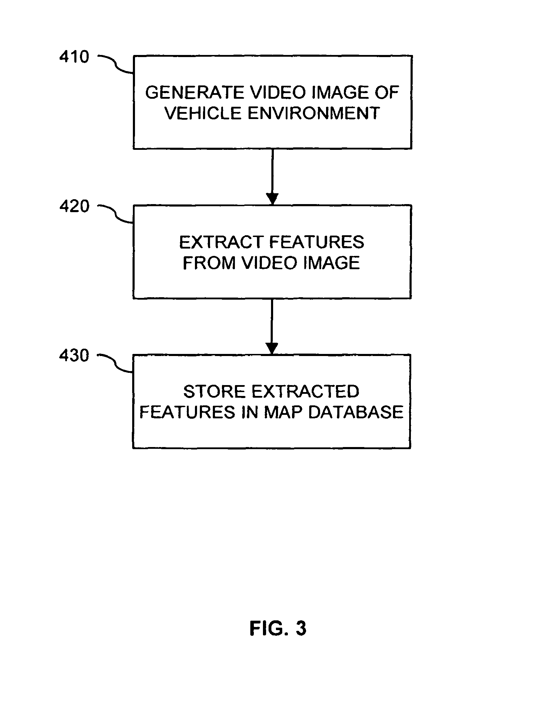

Fig. 3 shows a flow chart which illustrates method steps of a driver assist method in accordance with the above-mentioned principles. The method steps of Fig. 3 are intended to illustrate the process of storing the reference features in the map database 220. The process of Fig. 3 may also be referred to as a learning process.

In step 410, a video image of the vehicle environment is generated. This may be accomplished by any vehicle which is equipped with the driver assist system as illustrated in Figs. 1 and 2. Alternatively, dedicated vehicles may be used for obtaining the video data.

In step 420, features are extacted from the video image. This may be accomplished by vehicle-based data processing resource. Alternatively, an external data processing resource may be used as well, e.g. if high data processing capacities are required.

In step 430, the extracted features are stored as location attributes in the map database 220. For this purpose, the extracted features are associated with a specific object or semantic unit, e.g. a point-of-interest, a specific building, or a specific traffic sign. Further, the features are associated with location data, i.e. the location data corresponding to the position from which the video image with the extracted feature was detected. For example, the features may be associated with a specific GPS-position. The reference features can then be selectively retrieved from the map database 220 on the basis of the location data. Further, object data relating to the reference features can be retrieved from the map database 220.

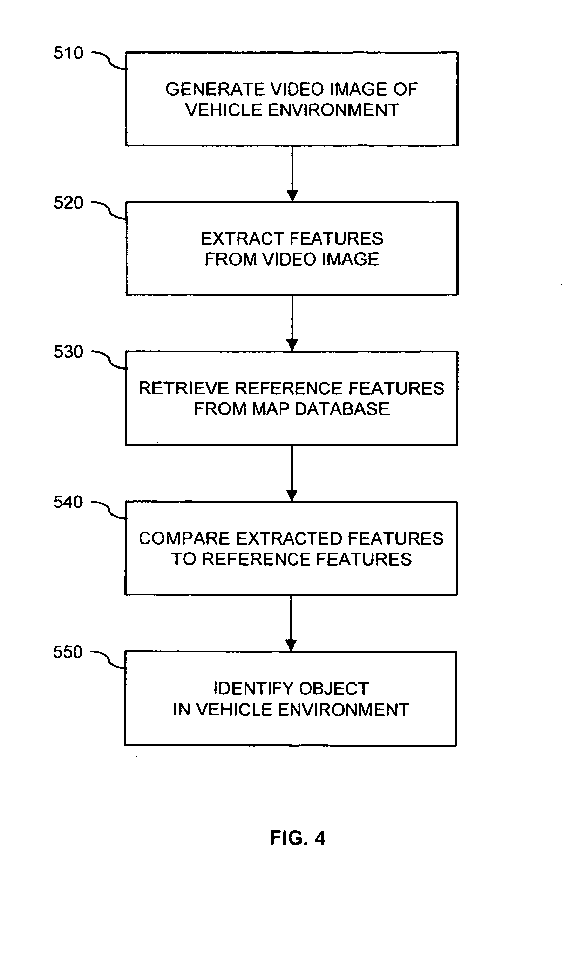

In the above process, the reference features may be subjected to a conditioning process and/or to a compression process before being stored in the map database. For example, certain artifacts due to noise or image faults can be removed. Further, as an alternative or in addition to generating the reference features on the basis of a video image, the reference features may be derived from a three-dimensional model of the vehicle environment. Fig. 4 shows a flow for illustrating method steps of a driver assist method, which correspond to a normal operation of the driver assist system according to the principles as explained above.

In step 510, a video image of the vehicle environment is generated.

In step 520, features are extracted from the video image. This may be accomplished by a vehicle-based data processing resource or by an external data processing resource.

In step 530, reference features are retrieved from the map database 220 on the basis of location data of the vehicle 100.

In step 540, the extracted features are compared to the reference features from the map database 220. This may be accomplished by a vehicle-based data processing resource or by an external data processing resource.

In step 550, an object in the vehicle environment is identified on the basis of the comparison between the extracted features and the reference features.

The identified object may then be used as the basis for providing an indication to the driver of the vehicle 100. Video data and/or audio data for providing the indication may be computed by vehicle-based data processing resource or by an external data processing resource.

This is to be understood that the object identification process as described above may not only be used to provide indications to a driver of the vehicle, but also to improve positioning accuracy of a navigation system of the vehicle. In particular, deviations of location data from the actual position of the vehicle may be identified by matching the identified object with the corresponding structure in the video signal.

To summarize, embodiments of the invention as explained above allow for efficiently using vehicle-based data processing resources and external data processing resources as to implement the object identification process in a video-based driver assist system.

## Claims

1. A driver assist method, comprising:
transmitting a first data signal (D1) from the vehicle (100) to an external data processing resource (210), the first data signal (D1) including at least location data of the vehicle (100); and
transmitting a second data signal (D2) from the external data processing (210) resource to the vehicle (100), the second data signal (D2) including object identification data of an object generated in response to the location data and
including at least one reference feature selected from a plurality of precomputed reference features which are stored as location attributes in an external map database, and including data representing characteristics of said object associated to the reference feature;
a vehicle-based video capturing device (130) generating a video signal representing a vehicle environment outside a vehicle (100);
a vehicle-based data processing resource (110) extracting at least one feature from the video signal;
the vehicle-based data processing resource (110) comparing the extracted feature to the reference feature;
the vehicle-based data processing resource (110) identifying said object in the vehicle environment on the basis of the comparison of the extracted feature and the reference feature;
displaying the video signal to the driver; and
providing an indication to a driver of the vehicle (100) on the basis of the
identified object and on the basis of the object identification data,
wherein the indication involves highlighting road edges as said identified object in the video signal which is displayed to the driver, and
wherein the extracted features and the reference features correspond to a transformation-invariant feature representation of distinctive image points.

2. The method according to claim 1,
wherein the external data processing resource (210) communicates with a plurality of vehicles (100).

3. The method according to claim 2,
wherein the external data processing resource (210) correlates features extracted from video signals of different vehicles (100).

4. The method according to any one of the preceding claims,
wherein the external data processing resource (210) communicates with the vehicle via an Internet-based communication channel.

5. A driver assist device to be mounted in a vehicle (100), comprising:
a vehicle-based transmitter (140) for transmitting a first data signal (D1) to an external data processing resource (210), the first data signal (D1) including at least location data of the vehicle (100); and
a vehicle-based receiver (150) for receiving a second data signal (D2) from the external data processing resource (210), the second data signal (D2) including object identification data of an object generated in response to the location data and including at least one reference feature selected from a plurality of precomputed reference features and stored as location attributes in an
external map database (220) , and including data representing characteristics of said object associated to the reference feature;
a vehicle-based video capturing device (130) configured to generate a video
signal representing a vehicle environment outside the vehicle (100);
a vehicle-based data processing resource (110) configured to identify said object in the vehicle environment on the basis of a comparison between at least one feature extracted from the video signal and the reference feature;
and
an indication device (160) configured to provide an indication to a driver of the vehicle (100) on the basis of the object identified in the vehicle
environmen and on the basis of the object identification data,
wherein the indication involves highlighting road edges as said identified object in the video signal which is displayed to the driver, and
wherein the extracted features and the reference features correspond to a transformation-invariant feature representation of distinctive image points.

6. The driver assist device according to claim 5,
wherein the driver assist device is configured for implementing the method according to any one of claims 1 to 4.

## Patentansprüche

1. Fahrerassistenzverfahren, umfassend folgende Schritte:
Übertragen eines ersten Datensignals (D1) vom Fahrzeug (100) an eine externe Datenverarbeitungsressource (210), wobei das erste Datensignal (D1) mindestens die Positionsdaten des Fahrzeugs (100) umfasst; und
Übertragen eines zweiten Datensignals (D2) von der externen Datenverarbeitungsressource (210) an das Fahrzeug (100), wobei das zweite Datensignal (D2) Objektidentifizierungsdaten eines Objekts umfasst, die als Reaktion auf die Positionsdaten erzeugt werden, und mindestens ein Referenzmerkmal umfasst, das aus einer Vielzahl von vorab berechneten Referenzmerkmalen, die als Positionsattribute in einer externen Zuordnungsdatenbank gespeichert sind, ausgewählt wird, und Daten umfasst, die Kennzeichen des Objekts darstellen, die mit dem Referenzmerkmal verknüpft sind;
wobei eine fahrzeugbasierte Videoaufnahmevorrichtung (130) ein Videosignal erzeugt, das eine Fahrzeugumgebung außerhalb eines Fahrzeugs (100) darstellt;
wobei eine fahrzeugbasierte Datenverarbeitungsressource (110) mindestens ein Merkmal aus dem Videosignal entnimmt;
wobei die fahrzeugbasierte Datenverarbeitungsressource (110) das entnommene Merkmal mit dem Referenzmerkmal vergleicht;
wobei die fahrzeugbasierte Datenverarbeitungsressource (110) das Objekt in der Fahrzeugumgebung auf der Grundlage des Vergleichs des entnommenen Merkmals und des Referenzmerkmals identifiziert;
Anzeigen des Videosignals für den Fahrer; und
Bereitstellen einer Angabe für einen Fahrer des Fahrzeugs (100) auf der Grundlage des identifizierten Objekts und auf der Grundlage der Objektidentifizierungsdaten;
wobei die Angabe das Hervorheben von Straßenrändern als identifiziertes Objekt in dem Videosignal umfasst, das für den Fahrer angezeigt wird; und
wobei die entnommenen Merkmale und die Referenzmerkmale einer transformationsinvarianten Merkmalsdarstellung markanter Bildpunkte entsprechen.

2. Verfahren nach Anspruch 1, wobei die externe Datenverarbeitungsressource (210) mit einer Vielzahl von Fahrzeugen (100) kommuniziert.

3. Verfahren nach Anspruch 2, wobei die externe Datenverarbeitungsressource (210) Merkmale korreliert, die aus Videosignalen von verschiedenen Fahrzeugen (100) entnommen werden.

4. Verfahren nach einem der vorhergehenden Ansprüche, wobei die externe Datenverarbeitungsressource (210) mit dem Fahrzeug über einen internetbasierten Kommunikationskanal kommuniziert.

5. Fahrerassistenzvorrichtung zum Einbau in ein Fahrzeug (100), umfassend:
- einen fahrzeugbasierten Sender (140) zum Senden eines ersten Datensignals (D1) an eine externe Datenverarbeitungsressource (210), wobei das erste Datensignal (D1) mindestens die Positionsdaten des Fahrzeugs (100) umfasst; und
- einen fahrzeugbasierten Empfänger (150) zum Empfangen eines zweiten Datensignals (D2) von der externen Datenverarbeitungsressource (210), wobei das zweite Datensignal (D2) Objektidentifizierungsdaten eines Objekts umfasst, die als Reaktion auf die Positionsdaten erzeugt werden, und mindestens ein Referenzmerkmal umfasst, das aus einer Vielzahl von vorab berechneten Referenzmerkmalen, die als Positionsattribute in einer externen Zuordnungsdatenbank (220) gespeichert sind, ausgewählt wird, und Daten umfasst, die Kennzeichen des Objekts darstellen, die mit dem Referenzmerkmal verknüpft sind;
wobei eine fahrzeugbasierte Videoaufnahmevorrichtung (130) konfiguriert ist, um ein Videosignal zu erzeugen, das eine Fahrzeugumgebung außerhalb eines Fahrzeugs (100) darstellt;
wobei eine fahrzeugbasierte Datenverarbeitungsressource (110) konfiguriert ist, um das Objekt in der Fahrzeugumgebung auf der Grundlage eines Vergleichs zwischen mindestens einem Merkmal, das aus dem Videosignal entnommen wird, und dem Referenzmerkmal zu identifizieren; und
wobei eine Angabevorrichtung (160) konfiguriert ist, um eine Angabe für einen Fahrer des Fahrzeugs (100) auf der Grundlage des in der Fahrzeugumgebung identifizierten Objekts und auf der Grundlage der Objektidentifizierungsdaten bereitzustellen;
wobei die Angabe das Hervorheben von Straßenrändern als identifiziertes Objekt in dem Videosignal umfasst, das für den Fahrer angezeigt wird; und
wobei die entnommenen Merkmale und die Referenzmerkmale einer transformationsinvarianten Merkmalsdarstellung markanter Bildpunkte entsprechen.

6. Fahrerassistenzvorrichtung nach Anspruch 5, wobei die Fahrerassistenzvorrichtung konfiguriert ist, um das Verfahren nach einem der Ansprüche 1 bis 4 umzusetzen.

## Revendications

1. Procédé d'assistance au conducteur, comprenant :
la transmission d'un premier signal de données (D1) depuis le véhicule (100) à une ressource externe de traitement de données (210), le premier signal de données (D1) comprenant au moins des données de géolocalisation du véhicule (100) ; et
la transmission d'un deuxième signal de données (D2) depuis la ressource externe de traitement de données (210) au véhicule (100), le deuxième signal de données (D2) comprenant des données d'identification d'objets d'un objet produites en réponse aux données de géolocalisation et comprenant au moins une caractéristique de référence sélectionnée parmi une pluralité de caractéristiques de référence précalculées, stockées sous forme d'attributs de géolocalisation dans une base externe de données cartographiques, et
comprenant des données représentant des caractéristiques dudit objet associé à la caractéristique référencée ;
un dispositif de capture vidéo monté sur le véhicule (130) produisant un signal vidéo représentant l'environnement du véhicule à l'extérieur du véhicule (100) ;
une ressource de traitement de données montée sur le véhicule (110) extrayant au moins une caractéristique du signal vidéo ;
la ressource de traitement de données montée sur le véhicule (110) comparant la caractéristique extraite à la caractéristique de référence ;
la ressource de traitement de données montée sur le véhicule (110) identifiant ledit objet dans l'environnement du véhicule en fonction de la comparaison de la caractéristique extraite à la caractéristique de référence ;
l'affichage du signal vidéo pour le conducteur ; et
la fourniture d'une indication au conducteur du véhicule (100) en fonction de l'objet identifié et en fonction des données d'identification de l'objet,
dans lequel l'indication consiste à mettre en surbrillance le bord de la route, tel que ledit objet identifié, dans le signal vidéo qui s'affiche pour le conducteur ; et
dans lequel les caractéristiques extraites et les caractéristiques de référence correspondent à une représentation de la caractéristique de transformation invariante de points d'image distincts.

2. Procédé selon la revendication 1,
dans lequel la ressource externe de traitement de données (210) communique avec une pluralité de véhicules (100).

3. Procédé selon la revendication 2, dans lequel la ressource externe de traitement de données (210) met en corrélation les caractéristiques extraites des signaux vidéo de différents véhicules (100).

4. Procédé selon l'une quelconque des revendications précédentes,
dans lequel la ressource externe de traitement de données (210) communique avec le véhicule par l'intermédiaire d'un canal de communication sur Internet.

5. Dispositif d'assistance au conducteur destiné à être monté sur un véhicule (100), comprenant :
un émetteur monté sur le véhicule (140) pour transmettre un premier signal de données (D1) à une ressource externe de traitement de données (210), le premier signal de données (D1) comprenant au moins des données de géolocalisation du véhicule (100) ; et
un récepteur monté sur le véhicule (150) pour recevoir un deuxième signal de données (D2) émis par la ressource externe de traitement de données (210), le deuxième signal de données (D2) comprenant des données d'identification d'objets d'un objet produites en réponse à des données de géolocalisation et comprenant au moins une caractéristique de référence sélectionnée parmi une pluralité de caractéristiques de référence précalculées, stockées sous forme d'attributs de géolocalisation dans une base externe de données cartographiques (220),
et comprenant des données représentant des caractéristiques dudit objet associé à la caractéristique référencée ;
un dispositif de capture vidéo monté sur le véhicule (130), configuré pour produire un signal vidéo représentant l'environnement du véhicule à l'extérieur du véhicule (100) ;
une ressource de traitement de données montée sur le véhicule (110), configurée pour identifier ledit objet dans l'environnement du véhicule en fonction d'une comparaison entre au moins une caractéristique extraite du signal vidéo et la caractéristique de référence ; et
un dispositif d'indication (160) configuré pour fournir une indication au conducteur du véhicule (100) en fonction de l'objet identifié dans l'environnement du véhicule et en fonction des données d'identification de l'objet,
dans lequel l'indication consiste à mettre en surbrillance les bords de la route, tel que ledit objet identifié, dans le signal vidéo qui s'affiche pour le conducteur ; et
dans lequel les caractéristiques extraites et les caractéristiques de référence correspondent à une représentation de la caractéristique de transformation invariante de points d'image distincts.

6. Dispositif d'assistance au conducteur selon la revendication 5,
dans lequel le dispositif d'assistance au conducteur est configuré pour la mise en oeuvre du procédé selon l'une quelconque des revendications 1 à 4.
